# EUROPEAN PATENT SPECIFICATION

(11) **EP 4 036 760 B1**
(45) Date of publication and mention of the grant of the patent: **18.12.2024**
(21) Application number: 21154563.7
(22) Date of filing: 01.02.2021
(51) Int. Cl.: G06F 16/955

(54) **METHOD AND SYSTEM FOR AUTOMATED AND DYNAMIC MAIN DOMAIN DETERMINATION AND IDENTIFICATION**
VERFAHREN UND SYSTEM ZUR AUTOMATISCHEN UND DYNAMISCHEN HAUPTDOMÄNENBESTIMMUNG UND -IDENTIFIZIERUNG
PROCÉDÉ ET SYSTÈME DE DÉTERMINATION ET D'IDENTIFICATION AUTOMATISÉES ET DYNAMIQUES DU DOMAINE PRINCIPAL

(43) Date of publication of application: 03.08.2022
(73) Proprietor: Deutsche Telekom AG, 53113 Bonn (DE)
(72) Inventor: SBEITI, Mohamad, 45657 Recklinghausen (DE); WILL, Niclas, 51109 Köln (DE); LIPPMANN, Nico, 32351 Sternwede (DE)
(74) Representative: Braun-Dullaeus Pannen Emmerling Patent- & Rechtsanwaltspartnerschaft mbB

(56) References cited:
- WO-A1-2015/003556
- US-A1- 2011 208 720

## Description

This invention relates to a method for automatic and dynamic determination of Information Technology (IT) systems belonging to an entity in order to evaluate the attack surface of the entity. In particular the invention relates to a method for automated and dynamic main domain determination and identification. Furthermore, this invention relates to a computer system and a computer product for automatic and dynamic determination of IT systems, in particular the automated and dynamic main domain determination and identification.

Security is a core need for digitization, in particular because due to Industry 4.0, Internet of Things (IoT) and new access technologies, such as 5G, the attack surface of entities is to become larger. For example, there have been 16 billion IoT connected devices in 2016 while 29 billion devices are forecast by 2022. Meanwhile, the number of successful large-scale cyber-attacks is rising (e.g. Emotet and WannaCry). In addition, the asymmetry in the cyberwarfare is increasing. The ability to harm enterprises, organizations and even states is increasing, despite those entities invest more in their defense infrastructure.

In this context one fundamental question for the adopters of digitization and new access technologies is, how they could be well equipped against security threats. Especially, the following three points pose an immense challenge, with which existing security measures and tools have not been able to cope:
- A detailed overview of own (entity) IT systems is decreasing due to the continuous boost of new online services and interconnected systems, combined with agile development methods and the emerging multi cloud deployment strategy.
- The number of discovered vulnerabilities is rapidly increasing, for example in the last two years an 88% increase in application vulnerabilities was witnessed. This curve is even expected to continue rising due to the growing number of services and products combined with the total increase of resources and capabilities in the area of vulnerability research.
- The large-scale exploitation time of vulnerabilities is decreasing. For example, two Common Vulnerability Exposures were successfully exploited within hours of a patch release (CVE-2018-2628 and CVE-2018-7602). This is due to the fact the number of online easy-to-use open-source exploitation tools and Proof-of-Concepts have become widespread.

Due to these developments and the limitation of existing solutions, malicious users with low level of expertise have become capable to hack large organizations.

WO 2015/003556 A1 shows a device and method for acquiring second-level domain name information associated with a main domain name. The device comprises: a webpage crawling module which is configured to crawl a webpage content of which the URL is set as a main domain name; and a first domain name acquisition module which is configured to analyze the crawled webpage content, so as to acquire second-level domain name information associated with the main domain name in the webpage content.

To address the issues raised above, it is important to discover and evaluate the attack surface of an entity (company, organization, etc.) in real time. First, a comprehensive inventory of the IT infrastructure of the entity is automatically retrieved. Second, an enhanced in time vulnerability analysis and evaluation of the discovered IT infrastructure is performed. The information gathered is relevant for any company to accelerate management discussions and to take appropriate IT security decisions.

This patent application deals with the first point - namely, the automatic and dynamic asset discovery. This enables an entity to have always an overview of their online assets, respectively IT systems (IP addresses, domains and subdomains) from an external point of view, in particular the view of malicious hackers.

One important aspect of the automatic and dynamic discovery of IT systems is the automatic and dynamic determination and identification of main domains that belong to an entity.

The objective of the undelaying invention is to provide a method for automatic and dynamic determination and identification of main domains belonging to an entity which provides a comprehensive and up-to-date overview of the active/online domain names of an entity in an efficient way, in particular wherein the determined and identified main domain overview could be used for evaluation of the attack surface of the entity. Furthermore, it is an objective of this invention to provide a computer system, which is suitable to perform the method. Moreover, it is objective invention to provide a program product for automatic and dynamic determination and identification of main domains, when executed by the computer system, causes computer system to perform the method steps.

The underlying objective is solved by a method which has the features of the first claim. Advantageous embodiments of the invention are given by the dependent claims.

The method according to the invention comprises the following steps performed by a computer system:
- a searching step, wherein a search list is generated by using a target name as input to a at least one first data source, in particular a merge and acquisition data base or a web search engine;
- an extraction step, wherein a list of main domains, in particular second-level domains, is extracted from the search list;
- a counting step, wherein a first score is determined for each main domain of the list of main domains by counting the number of the appearances within the list of main domains;
- a keyword generation step, wherein at least one validation keyword is generated on basis of the target name;
- a scoring step, wherein at least one second score is determined for each main domain of the list of main domains by multiplying the number of appearances of the at least one validation keyword within a at least one second data source with a validation keyword factor assigned to the validation keyword; and
- a calculation step, wherein a final score is determined for each main domain as sum of the first score and the at least one second score;
- a validation step, in which the validity of each main domain is determined on basis of a comparison of the final score of each main domain with a threshold, wherein the main domain is considered as valid if the final score is above the threshold, and wherein the main domain is considered as invalid if the final score in equal or below the threshold.

By performing the searching step a search list is generated on basis of the initial target name, wherein the initial target name could be the name or title of the entity or organization, e.g. "T-System" or "T-Mobile US", and may be defined by a user via an input device of the computer system or automatically by the computer system. The search list preferably comprises at least one list of uniform resource locators (URLs) or at least one list of domains. The at least one list of uniform resource locators is a collected from the at least one first data source by using the target name as input or query for the at least one first data source. For example, the ULRs provided by the first data source are "https://www.t-systems.com/de/en", "https://www.t-systems.com/de/en/data-privacy" or the like. Particularly preferably the list of domains is extracted from the list of uniform resource locators (URLs). For example, domains are "www.t-systems.com" or the like. The list obtained from the at least one first data source in this way forms the basis for determining the main domains associated with the target name.

For the determination of the search list, the computer system uses the input or the query to get access to the at least one first data source, for example a merge and acquisition database, like S&P Capital IQ, Amadeus or an official database/register (e.g. in Germany the Bundesanzeiger with the homepage "https://www.bundesanzeiger.de/"), or a search engine, like Google, Yahoo, Bing or Duckduckgo. By doing so the computer system efficiently generates a broad up-to-date overview of relevant URLs and/or domains related to the target name. On basis of the search list by performing the extraction step the computer system extracts the list of main domains, in particular second-level domains, like "t-systems.com". By doing so the computer system determines an up-to-date overview of relevant main domains.

For each main domain of the list of main domains the number of appearances within the list of main domains is determined in the counting step. The number of appearances represents the first score of the corresponding main domain. The first score of each main domain is a measure for the identification of this main domain. The more frequently the main domain appears in the extracted list of main domains, the more likely it is that this main domain is related to the target name, respectively the entity or organization.

In addition, to identify the main domains related with the target name a validation keyword is generated on basis of the target name within the keyword generation step and a validation keyword factor is assigned to the validation keyword. The validation keyword is used within the subsequent scoring step in order to determine the second score, whereas the second score of each main domain corresponds to the multiplication of the number of appearances of the validation keyword within a second data source with the corresponding validation keyword factor. By querying the second data source and determining the second score a more reliable identification of the main domains could be performed by the computer system.

Finally, the first score and the second score of each main domain of the list of main domains are added to determine the final score of the main domain. By doing so a two-step method for the identification of a main domain to a target name is realized by the computer system, that provides an automatic and reliable identification of the main domains by the computer system.

According to an aspect of the invention the method comprises an enrichment step, wherein enriched target names are generated by appending identification words to the target name, and wherein the enriched target names are used as input to at least one first data source within the searching step. Identification words are for example "imprint", "privacy", "data protection", "website" or the like. By the appending of identification words provides preferably a more focused search for relevant URLs and domains within the at least one first data source. Advantageously, the search can be directed to URLs or domains that contain information that are related to the identification of the main domain.

According to an aspect of the invention the searching step comprises the usage of the target name and/or the enriched target name as input for more than one first data source, wherein a list of uniform resource locators or a list of domains is generated for each fist data source, and wherein the search list is generated by aggregation of the lists of uniform resource locators or the lists of domains of the first data sources. The search lists collected from each first data source are aggregated to a single search list, wherein the repetitions of URLs a and domain are avoided. The usage of more than one first data sources provide the broader database for the determination of main domains that are related to the target name and or the enriched target name.

According to an aspect of the invention the extraction step contains an additional filter step, in which main domains that are comprised in a blacklist are filtered out of the list of main domains. The additional filter step provides the opportunity to filter out domains that are not related to the target name, respectively the entity. Domains that should not be further considered by this method are stored within the blacklist. Preferably the blacklist contains general information domains, like encyclopedias or government registers. For example, domains within the blacklist are "Wikipedia", "Bloomberg" or the like. The entries of the blacklist could be generated manually or automatically. Preferably the entries of the blacklist are generated automatically on basis of the identification or validation of the main domains by the computer system.

According to an aspect of the invention the validation keywords are generated by removing stop words, company forms and/or words having a small size form the target name. Stop words are for example "and", "or", "is", "are", "in", "on" or the like. Company forms are "gmbh", "ag", "inc" or the like. Words having a small size, for example less than 3 characters are "us", "de", "eu" or the like. By the movement of stop words, company forms and/or words having a small size the determination of the second score is focused on the core of the target name so that advantageously also variations of the target name are considered within the scoring step. Preferably the validation keywords are generated by a combination of the target name with at least one organization names or entity names, in particular wherein delimiters are uses. Delimiters are for example "␣", "_", "-" or the like. A validation keyword factor is assigned for each validation keyword, whereas in particular a higher validation keyword factor is assigned for validation keywords that are a combination of the target name with at least one organization name than for validation keywords that are only based on the target name. For example, the combination of the target name "T-Mobile US" with the organization name or entity name "Deutsche Telekom" leads to the following validation keywords with the adjacent assigned validation keyword factor: "deutsche": 5, "deutsche-telekom": 10, "deutschetelekom": 10, "deutsche telekom": 10, "telekom": 5, "t-mobile": 5. The combination of the target name and the organization name with the higher validation keyword factor relates to a higher rating of validation keywords that are related to the organization, respectively entity.

According to an aspect of the invention the at least one second data source is a data base which contains information about domains and IP addresses, in particular an IP-Whois data base, wherein the data base entry for the main domain or a corresponding IP address is scanned for the number of appearances of the validation keywords. Preferably the data base entry is scanned which contains the organization name to which the domain is assigned. The data base stores the registered users or assignees of internet resources, such as a domain name or an IP address. By accessing the data base, the computer system gets information about the users or assignees of the respective main domain. This allows to identify whether the respective main domain is related to the target name, respectively organization or entity.

According to an aspect of the invention the at least one second data source is a certificate information of the main domain, in particular the HTTPS certificate of the website that corresponds to the main domain. The computer system gets the certificate information of the main domain by access of the server which provides the main domain. In particular the computer system gets the HTTPS certificate from the website which is related to the main domain. Preferably the certified information that comprises the organization name assigned to the domain is scanned for the number of appearances of the validation keywords. This provides advantageously a reliable identification of the main domain.

According to an aspect of the invention the at least one second data source is the domain name. The usage of the domain name itself has the effect that the computer system just has to scan the already available list of main domains. As an advantage the computer system therefore does not need to access external data sources, which can make the scoring step faster and more independent.

According to an aspect of the invention the at least one second data source is the content of the website that corresponds to the main domain, in particular the HTTP content or HTTPS content, wherein the source code of the website is scanned for the number of appearances of the validation keywords. The content of the website that corresponds to the main domain contains typically relevant information regarding the identity of the main domain itself. By scanning the source code of the website, the computer system is able to extract relevant information for identification of the main domain. Preferably the computer system accesses the server which hosts the main domain and scans the source code, in particular the source code of the HTTP content or HTTPs content.

According to an aspect of the invention the at least one second data source is the content of the imprint of the website that corresponds to the main domain, wherein the source code of the imprint is scanned for the number of appearances of the validation keywords, in particular an imprint information that comprises the organization name or entity name. The computer system uses the source code of the website of the corresponding main domain to extract the content of the imprint. For example, the computer system can extract the imprint content directly from the source code of the website or the computer system extract the link to the imprint content and uses this link to get access of the source code of the imprint content. After she extraction of the imprint content the computer system scans the source code for the number of appearances of the validation keywords. Advantageously the imprint provides isolated and more reliable information for the identification of the main domain.

According to an aspect of the invention more than one second scores are determined for each main domain and the second scores are added to the first score, wherein more than one validation keywords are generated and the respective second score is determined for each validation keyword; and/or wherein more than one second data sources are scanned for the number of validation keyword appearances and the second score is determined for each second data source. This means that the second score is determined for each combination of a second data source and a validation keyword. Therefore, the number of second scores corresponds to the multiplication of the number of validation keywords with the number of second data sources. For example, when only one second data source is used the number of second scores corresponds to the number of validation keyword, whereas when only one validation keyword is used the number of second scores corresponds to the number of second data sources. Preferably each of the determined second scores is added to the first score in order to calculate the final score for each main domain. By using several second data sources the data basis for the identification of the main domain is enlarged so that the reliability of the identification is advantageously improved. Also, the usage of the larger number of validation keywords, in particular combined validation keywords, leads to higher reliability.

According to an aspect of the invention the at least one second score is weighted differently depending on the second data source. Preferably the at least one second score of the certificate information and/or the at least one second score of the imprint is weighted higher than the at least one scores of the other second data sources. The different weighting of the second scores of the certificate information takes into account that the validity of the certificate information is reviewed by checking the corresponding signature. Therefore, the reliability of the certificate information, in particular the HTTPs certificate, is considered to be relatively, in particular in comparison to the IP-Whois database, the main domain or the website. Also, the reliability of the imprint is considered to higher reliability than in particular the content of the website itself. Preferably the different weighting is achieved by the multiplication of the validation keyword factor with a defined weighting factor, for example a factor of 2. The different weighting leads advantageously to a higher reliability of the identification.

The method of the invention comprises a validation step, in which the validity of each main domain is determined on basis of a comparison of the final score of each main domain with a threshold, wherein the main domain is considered as valid if the final score is above the threshold, and wherein the main domain is considered as invalid if the final score in equal or below the threshold. The validation step based on the threshold determines for each main domain whether this main domain is valid or invalid. When the main domain is considered as valid that means that the main domain is identified to belonging to the organization or entity, whereas when the main domain is considered as invalid that it means the main domain is identified to not belonging to the organization or entity. The comparison of the final score with the threshold provides advantageously a simple and efficient way to determine whether the main domain belongs to the organization or entity, respectively whether the main domain could be identified with the organization or entity.

Preferably, if the main domain is considered to be invalid by a certain number, this main domain will be added to the blacklist. As result, in subsequent determination and identification methods this main domain will be filtered out within the filter step of the extraction step. For these main domains it is no longer necessary to determine the first and second score so that the efficiency of the method is advantageously improved.

The underlying problem is also solved by a computer system for automatic and dynamic determination and identification of main domains, configured to perform the steps described above. The computer system is preferably one physical and/or logical server (cloud service) that is configured to perform the above-described steps. In particular the computer system comprises several physical and/or logical server (cloud service), preferably deployed as computer cluster with several nodes. Preferably, the computer system comprises computing means and communication means that are configured to perform the above-mentioned steps automatically. In particular the means, preferably communication means, are configured to access the at least one first data source and the at least one second data source by using or sending an input or a query to the at least one first data source and the at least one second data source. The means of the computer system are in particular configured to search or scan the at least one first data source to obtain the URLs or domains for the generation of the search list and wherein the means are configured to search and scan the at least one second data source to obtain the number of appearances of the validation keyword within the at least one second data source.

The underlying problem is also solved by a computer program product for automatic and dynamic determination and identification of main domains belonging to an entity which, when executed by a computer system, causes the computer system to perform the above-described method steps.

In the following, preferred embodiments of the present invention are described with reference to the figures:
- Fig. 1:: shows a schematic overview flow chart of a method for automatic and dynamic determination of IT systems belonging to an entity in which the underlying invention is preferably embedded,
- Fig. 2:: shows a schematic flow chart of a method for dynamic determination and identification of main domains according to the invention.

Below, features of the invention are explained by way of a preferred embodiment. The present disclosure is not limited to the specifically named combinations of features. Rather, the features mentioned here can be combined arbitrarily into inventive embodiments, unless this is expressly excluded.

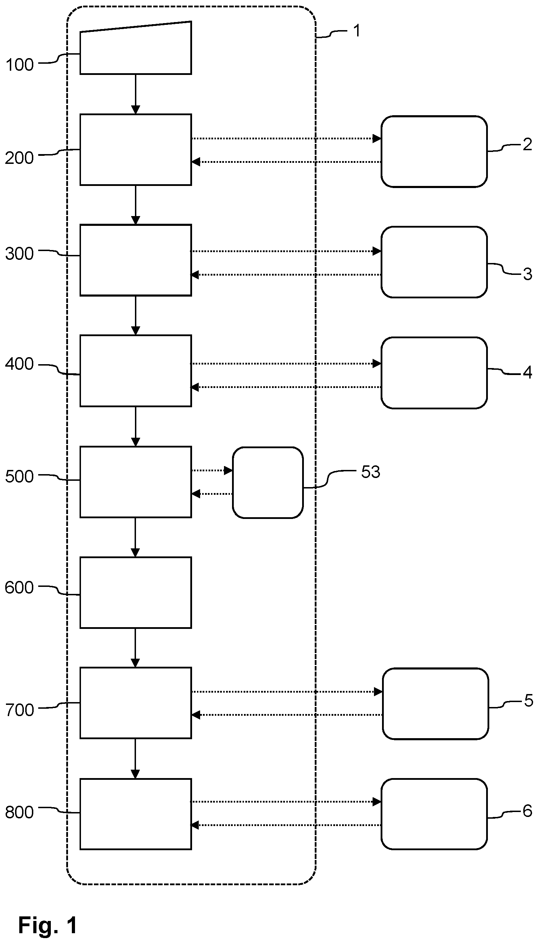

Fig. 1 shows a schematic overview of the method for automatic and dynamic determination of IT systems belonging to an entity, respectively company, enterprise, organization or the like. The method starts with the initial step 100, wherein an initial target name is defined. The initial target name could be the name or title of the entity, e.g. "Deutsche Telekom". A user could define the initial target name by an input device of a computer system 1 that performs the method, or it could be defined automatically by the computer system 1.

On basis of the initial target name a target name searching step 200 is performed, wherein a list of additional target names is generated. In order to search for the additional target names the computer system 1 uses the initial target name as input for a request to a first database 2. The first database 2 is for example a merge and acquisition database, such as S&P Capital IQ, Amadeus, official register (e.g. Bundesanzeiger) or the like. By access to the first database 2 the computer system 1 retrieves subsidiaries of the entity as additional target names and saves them within the list of additional target names.

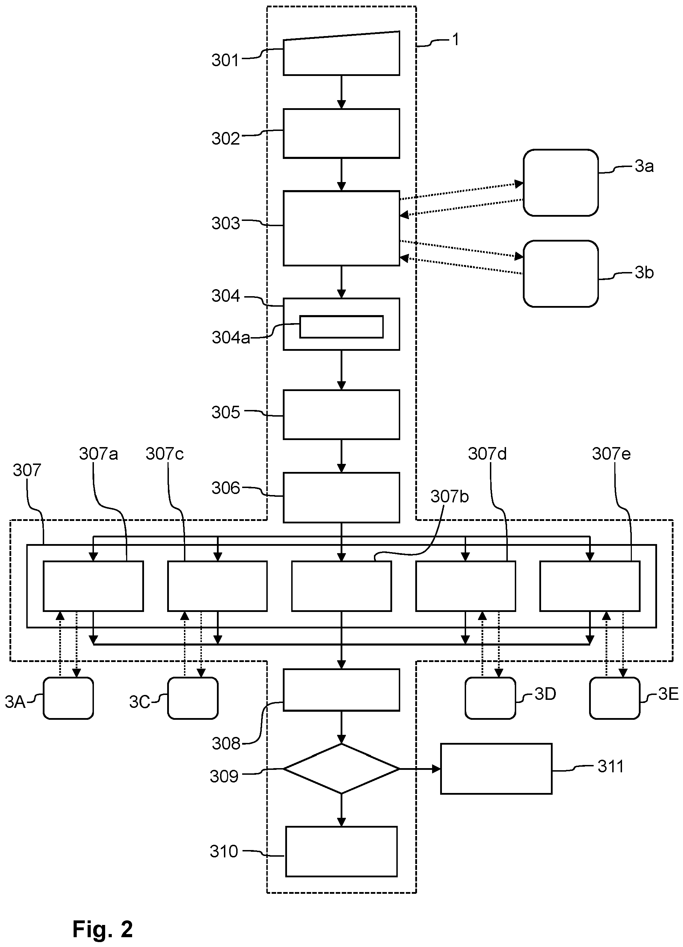

The initial target name and the additional target names are used as target names for the determination and identification for a main domain query step 300, wherein a list of main domains is generated. The underlying invention relates to the main domain query step 300 and is preferably embedded in the method for automatic and dynamic determination of IT systems shown in Fig. 1. In order to obtain and identify the main domains, the computer system 1 uses the target name, here the initial target name and/or the additional target names, as input for a request to at least one data source 3. By access to the at least one data source 3 the computer system 1 retrieves main domains of the organization or entity. The underlying invention is described in detail with regard to Fig. 2.

By usage of the queried main domains a subdomain enumeration step 400 is performed, wherein a list of subdomains is generated in addition to the existing list main domains. In order to enumerate the subdomains, the computer system 1 uses the main domains as input for a request to a third database 4. The third database 4 is for example a certificate data base (e.g. https://crt.sh), a subdomain enumeration tool or a passive domain name server database. By using the third database 4 the computer system 1 retrieves subdomains of the entity. Subdomains are in particular lower-level domains, like "admin.telekom.de" or "test.telekom.de". The list of subdomains could be a part of the list of main domains, or a separate list.

The domains of the list of main domains and the list of subdomains are validated with a domain validation step 500, wherein the domains are considered as valid (belonging to entity), invalid (not belonging to entity) or not determinable, when the validity could not be determined. For the determination of the validity of the domain's validation features are extracted from the domains. In addition, supportive features are extracted from the domains and evaluated by a supervised machine learning unit 53 in order to determine the validity of the domains. The supervised machine learning unit 53 is implemented within the computer system 1 and corresponds to a machine algorithm, for example a random forest algorithm or the like. The machine learning unit 53 is trained by supportive features extracted from valid domains, wherein the validity was determined on basis of the validation features. By usage of the machine learning unit 53 a link between the validation features 51 and the supportive features 52 is realized.

Within the domain name searching step 600 new main domains and/or new subdomains are searched on the basis of the valid domains of the list of main domains and/or the list of subdomains. For the search of new main domains and/or subdomains the valid domains are used as input for reverse searching techniques. Examples for these techniques are: Reverse Whois, Reverse Name Server, Reverse Mail Server, Buit-With and/or a search engine, like a Shodan Favicon Search. The found new main domains and/or new subdomains are preferably added to the list of main domains and/or the list of subdomains and validated by usage of the domain validation step 500.

A list of IP addresses is generated on basis of the list the domains of the list of main domains and/or the list of subdomains within an IP address searching step 700. The computer system 1 uses the domains as input for a fourth database 5 in order to obtain the corresponding IP addresses. The fourth database 5 is preferably a domain name system (DNS) server, wherein the IP addresses are resolved on the basis of the domains. In a preferred embodiment the validity of the IP addresses is also evaluated within the IP address searching step 700. For that it is checked whether the IP address corresponds to a valid or invalid domain.

In addition, a list of netblocks or IP blocks is generated within the netblock searching step 800. The computer system 1 uses the initial target name, the additional target names, the main domains and or the subdomains as input for a fifth database 6, wherein the fifth database is preferably an IP Whois database and/or a Regional Internet Registry, like the RIPE for Europe and Middle East.

The target name searching step 200, the main domain query step 300, the subdomain enumeration step 400, the domain validation step 500, the domain name searching step 600, the IP address searching step 700 and/or the netblock searching step 800 are repeated within iteration loops. The further iteration loop is stopped when no new active IT systems are found.

Fig. 2 shows the schematic flow chart of the method for dynamic and automatic determination and identification of main domains according to the invention.

The method starts with the target name definition step 301, wherein the target name is used as input for the method. The target name is the entity (initial target name) or the name of one the subsidiaries of the entity (additional target name). For example, the entity is "Deutsche Telekom AG" and the subsidiaries are: "T-Systems", "T-Mobile US", "Slovak Telekom", "Magyar Telekom", "T-Mobile Deutschland Gmbh" or the like. The target name could be defined manually by the user or automatically by the computer system 1.

Based on the target name defined in the target name definition step 301 an enrichment step 302 is performed; wherein relevant words are appended to the target name. Relevant words are in particular words that relate to the main side of the entity or organization, for example: "website, imprint", "privacy", "data protection" or the like. In context of the target name "T-Mobile US" the enriched target names are: [‴T-Mobile US" website', ‴T-Mobile US" privacy', 'T-Mobile US'] and context of the target "T-Systems" the enriched target names are: [‴T-Systems" website',‴T-Systems" privacy', 'T-Systems'].

The target name and the enriched target names are used as input for the searching step 303. Within the searching step 303 a search list is generated by using the target name and/or the enriched target names as input or query to at least one first data source 3a, 3b. The first data source 3a, 3b is for example a merge and acquisition database or a web search engine. Each of the first data sources 3a, 3b provides list of URLs for each of the enriched target names. For the above-mentioned enriched target names of the target name "T-Systems" the search engine of Google provides the following collected URLs:
"T-Systems" website: ['https://www.t-systems.com/de/en', 'https://www.t-systems.com/de/en/about-t-systems/company/profile','https://www.t-systems. com/in/en'];
"T-Systems" privacy: ['https://www.t-systems.com/de/en/data-privacy', 'https://www.t-systems.com/de/en/data-privacy/general-data-privacy-information-of-t-systems-international-gmbh', 'https://www.t-systems-mms.com/en/privacy-policy.html'];
T-Systems: ['https://www.t-systems.com/de/en', 'https://www.t-ystems.com/de/en/locations', 'https://www.t-systems.com/de/en/about-t-systems/company/profile'].

Within the searching step 1 the computer system 1 extracts the domains of the collected URLs for each of the first data sources 3a, 3b and generates a list of domains for each of the first data sources 3a, 3b. For example, the computer system extracts the following list of domains of the target name "T-Mobile US" for the search engine of Google:
T-Mobile US: ['en.wikipedia.org', 'en.wikipedia.org', 'en.wikipedia.org', 'www.telekom.com', 'www.handelsblatt.com', 'de.wikipedia.org', 'www.t-mobile.com', 'ciso.economictimes.indiatimes.com', 'www.telekom.com','www.t-mobile.com', 'www.t-mobile.com', 'www.t-mobile.com'].

Similar lists of domains or also extracted for the other first data sources, for example the search engines Yahoo, Bing or Duckduckgo.

Preferably the extracted lists of domains are aggregated to the single list of domains. The aggregated list corresponds to the search list provided by the searching step 303. For the above-mentioned example, the following search list is aggregated the target name,
T-Mobile US: [ ['en.wikipedia.org', 'en.wikipedia.org', 'en.wikipedia.org', 'www.telekom.com', 'www.handelsblatt.com', 'de.wikipedia.org', 'www.t-mobile.com', 'ciso.economictimes.indiatimes.com', 'www.telekom.com', 'www.t-mobile.com', 'www.t-mobile.com', 'www.t-mobile.com'],
['www.t-mobile.com', 'account.t-mobile.com', 'www.t-mobile.com', 'en.wikipedia.org', 'www.businesswire.com', 'finance.yahoo.com',
'www.fool.com', 'investor.t-mobile.com', 'www.my.t-mobile.com'], ['www.t-mobile.com', 'www.t-mobile.com', 'account.t-mobile.com', 'en.wikipedia.org', 'www.businesswire.com'],
['www.t-mobile.com', 'www.t-mobile.com', 'en.wikipedia.org', 'en.wikipedia.org', 'www.t-mobile.com', 'www.t-mobile.com', 'account.t-mobile.com', 'account.t-mobile.com', 'finance.yahoo.com', 'finance.yahoo.com', 'www.bloomberg.com', 'www.bloomberg.com', 'finance.yahoo.com', 'finance.yahoo.com', 'investor.t-mobile.com', 'investor.t-mobile.com', 'www.cnet.com', 'www.cnet.com', 'prepaid.t-mobile.com', 'prepaid.t-mobile.com'] ]

The search list is used as input for the extraction step 304, wherein the main domains are extracted from the search list. Preferably the extraction step 304 contains an additional filter step 304a, wherein the main domains that are comprised in a blacklist are removed or faded out of the list of main domains. The blacklist contains general information domains, like encyclopedias or government registers. For example, domains within the blacklist are "Wikipedia", "Bloomberg" or the like. After the extraction step 304 and filter step 304a the following list of main domains is generated for the above-mentioned target name

T-Mobile US: ['telekom.com', 'handelsblatt.com', 't-mobile.com', 'indiatimes.com', 't-mobile.com', 't-mobile.com', 't-mobile.com', 't-mobile.com', 't-mobile.com', 't-mobile.com', 't-mobile.com', 't-mobile.com'].

Within the subsequent counting step 305 a first score is determined for each main domain of the list of main domains provided by the extraction step 304. The first score for each main domain corresponds preferably to the number of appearances within the list of main domains. For example, the main domains of the main domain list for the above-mentioned target name "T-Mobile US" have the following first scores:
T-Mobile US: {'t-mobile.com': 9, 'telekom.com': 1, 'handelsblatt.com': 1, 'indiatimes.com': 1}.

In a keyword generation step 306 at least one validation keyword is generated on the basis of the target name. The validation keywords are for example generated by removing stop words from the target name, wherein stop words are for example "and", "or", "is", "are", "in", "on" or the like. Also, company forms like "gmbh", "ag" or "ink" can be removed for the generation of validation keywords. In addition, words that have a small size can be removed from the target name, for example words with less than 3 characters like "us", "de" or "eu". In a preferred embodiment the validation keywords can also be generated by a combination of the target names with the entity or organization names, wherein for the combination preferably delimiters like "␣", "_" or "-" are used. For each of the validation keywords a validation keyword factor is assigned, wherein preferably the higher validation keyword factor is assigned for validation keywords which are a combination. For example, the validation keyword factor for a single validation keywords is 5, whereas the validation keyword factor for the combination is 10. Exemplary the combination of the target name "T-Mobile US" with the organization name or entity name "Deutsche Telekom" leads to the following validation keywords with the adjacent assigned validation keyword factors: T-Mobile US: {"deutsche": 5, "deutsche-telekom": 10, "deutschetelekom": 10, "deutsche telekom": 10, "telekom": 5, "t-mobile": 5}.

The validation keywords and the assigned validation keyword factors are used within the scoring step 307 to determine at least one second score for each of the main domains of the list of main domains. The second score is determined by the multiplication of the number of appearances of the corresponding validation keyword within a at least one second data source 3A, 3C, 3D, 3E with the assigned validation keyword factor.

In a preferred embodiment a step 307a is executed, wherein the second data source is a domain database 3A, like an IP-Whois database. The computer system 1 sends a query to the domain database 3A and scans or searches the database entry that corresponds to the main domain or the database entry that corresponds to IP address of the main domain for the validation keywords. The number of appearances of the validation keyword within the database entry is multiplied by the assigned validation keyword factor. Preferably a specific part of the database entry is scanned, for example the part which contains the organization or entity name to which the domain is assigned. Exemplary for the main domain "telekom.com" of the above-mentioned target name "T-Mobile US" the second sore is determined by scanning the database entry for the URL "www.telekom.com" or the respective IP address "80.158.66.41" of the IP-Whois database 3A for the validation keywords. An exemplary result of a query of the domain database 3A is shown below, wherein the validation keyword, the URL of the main domain, the corresponding IP address and the number of appearances of the validation keyword are listed:
T-Mobile US: main domain "telecom.com"
whois original domain query {'www.telekom.com','telekom.com'}

| | | | |
|---|---|---|---|
| deutsche; | www.telekom.com; | 80.158.66.41; | 1 |
| deutsche-telekom; | www.telekom.com; | 80.158.66.41; | 0 |
| deutschetelekom; | www.telekom.com; | 80.158.66.41; | 0 |
| deutsche telekom; | www.telekom.com; | 80.158.66.41; | 1 |
| telekom; | www.telekom.com; | 80.158.66.41; | 1 |
| t-mobile; | www.telekom.com; | 80.158.66.41; | 0 |
| deutsche; | telekom.com; | 80.158.66.41; | 1 |
| deutsche-telekom; | telekom.com; | 80.158.66.41; | 0 |
| deutschetelekom; | telekom.com; | 80.158.66.41; | 0 |
| deutsche telekom; | telekom.com; | 80.158.66.41; | 1 |
| telekom; | telekom.com; | 80.158.66.41; | 1 |
| t-mobile; | telekom.com; | 80.158.66.41; | 0 |

The second scores are determined for all the validation keywords by multiplying the number of appearances with the validation keyword factor. For the above example with the query "www.telekom.com" the second score for the validation keyword "deutsche" is 5, the second score for the validation keyword "deutsch telekom" is 10 and the second score for the validation keyword "telekom" is 5. The same scores are also achieved for the query "telekom.com". The sum of all second scores of the validation key words of step 307a is thus 40. Taking into account only the step 307a the final score determined in a calculation step 308 would be the first score for the main domain "telekom.com", which is 1, and the sum of all second scores of step 307a, which is 40, leading to a final score of 41. The domain database 3A is also queried for the remaining main domains of the list of main domains of the target name "T-Mobile US", which are "t-mobile.com", "handelsblatt.com" and "indiatimes.com". For the above example, the corresponding final scores after the step 307a are:
T-Mobile US:
check_for_equal_domains after whois analysis {'telekom.com': 41, handelsblatt.com': 1, 't-mobile.com': 9, 'indiatimes.com': 1}.

In a preferred embodiment a step 307b is executed by the computer system 1, wherein the second data source is the domain name itself. The number of appearances of the validation keywords within the main domain name of the main domain list are determined within step 307b. The number of appearances of the validation keyword is multiplied with the corresponding validation keyword factor. For the above-mentioned example, the domain name "telekom.com" contains the validation keyword "telekom" which has the validation keyword factor of 5, leading to a second score of 5. Preferably this second score 5 is added to the first score of the main domain "telekom.com", which is 1, and to the sum of the second scores of step 307a, which is 40, leading to a final score of 46 for the main domain "telekom.com". The main domain is also queried for the remaining main domains of the list of main domains of the target name "T-Mobile US". For the above example, the corresponding final scores after the steps 307a and 307b are:
T-Mobile US:
{'telekom.com': 46, 'handelsblat.com': 1, 't-mobile.com':14, 'indiatimes.com': 1}.

In a preferred embodiment a step 307c is executed by the computer system 1, wherein the second data source is a certificate information 3B of the main domain. In particular the certificate information 3C is a HTTPS certificate of the domain/website. Preferably the part of the certificate information 3C is scanned for the number of appearances of the validation keyword that contains the organization name or the entity name to which the domain/website is assigned to. The computer system 1 sends a query to a server which hosts the website of the domain with the certificate information 3B, in particular the HTTPS certificate. For the above example the HTTPS certificate of the website "www.telekom.com" contains the "Deutsche Telekom IT GmbH" as assigned organization, this entry is scanned for the appearances of the validation keywords, whereas the number of appearances is multiplied with the corresponding validation keyword factor in order to determine the second score. For this example, the second score for the validation keyword "telekom" is 5, for the validation keyword "deutsche" 5 and for the validation keyword "deutsche telekom" 10. Preferably the second score is determined for all validation keywords and all second scores of the validation keywords are summed. In the above example the sum of all second scores of step 307c is 20. The certificate information 3C is also queried for the remaining main domains of the main domain list of the target name "T-Mobile US"", wherein the corresponding final scores after the steps 307a, 307b and 307c are:
T-Mobile US:
{'telekom.com': 66, 'handelsblatt.com': 1, 't-mobile.com': 2, 'indiatimes.com': 1}.

In a preferred embodiment the at least one second score, respectively the keyword factor, of the certificate information 3C is whited higher than the validation keyword factors of the other second data sources 3A, 3D and 3E. For example, an additional factor of 2 is used for the number of appearances of validation keywords within the certificate information 3C.

In a preferred embodiment a step 307d is executed by the computer system 1, wherein second source is the content of the website 3D that corresponds to the main domain. This is preferably the HTTP or HTTPS content of the website. In order to determine the number of appearances of the validation keyword within the content of the website the source code of the website is searched or scanned for the validation keywords. Preferably the computer system 1 obtains the source code of the website by access to the server which hosts the website of the main domain. The source code of the website 3D is searched for the number of appearances of the validation keywords. For the above-mentioned example with "telekom.com" as main domain the corresponding URL "www.telekom.com" is scanned or searched for the validation keywords leading for example to the following number of appearances:
T-Mobile US: with URL "www.telekom.com"
deutsche: 36; deutschetelekom: 12; telekom: 113; t-mobile: 4.

The validation keyword factor is preferably only added to the second score when the number of appearances exceeds a threshold, for example 10. For the above example this means that the validation keyword factor of 5 for the validation keyword "deutsche", the validation keyword factor of 10 for the validation keyword "deutschtelekom" and validation keyword factor of 5 for the validation keyword "telekom" are added as second scores, whereas the validation keyword factor of 5 for the validation keyword "t-mobile" is not added because the number of appearances is below the threshold of 10. As result the sum of all second scores of step 307d is 20 in this example, which leads to a final score of 86 for the main domain "telekom.com" when the steps 307a, 307b, 307s and 307d are executed and the scores added. The content of the website 3D is also queried for the remaining main domains of the main domain list of the target name "T-Mobile US", wherein for the above example, the corresponding final scores after the steps 307a, 307b, 307c and 307d are:
T-Mobile US:
{'telekom.com': 86, 'handelsblatt.com': 1, 't-mobile.com': 34, 'indiatimes.com': 1}.

In a preferred embodiment a step 307e is executed by the computer system 1, wherein the second data source is the content of the imprint 3E of the website that corresponds to the main domain. The imprint 3E of the website is obtained by the computer system 1 by access to the server which hosts the website of the main domain. In particular links of the website are searched and executed in order to obtain the source code of the imprint 3E of the corresponding website. Preferably an imprint information that comprises the organization name or entity name is searched for the appearances of the validation keyword. In a preferred embodiment the at least one second score, respectively the keyword factor, of the imprint 3E is whited higher than the validation keyword factors of the other second data sources 3A, 3C and 3D.

In a calculation step 308 the first score of the step 305 and the second scores of the step 307 are added in order to determine the final score of the main domain. When more than one validation keywords are generated a corresponding second score is determined for each validation keyword. Also, when more than one second data sources 3A, 3C, 3D, 3E are scanned for the number of appearances of validation keywords a corresponding second score is determined for each of the scanned second data sources 3A, 3C, 3D, 3E. In the above example all second scores of the steps 307a, 307b, 307c and 307d are added to the first score of the step 305 in order to determine the final score of 86 for the validation keyword "telekom.com".

In a validation step 309 the validity of each main domain is determined by the comparison of the final score with a threshold. The main domain is considered as valid when the final score is higher than the threshold (step 310), whereas the main domain is considered as invalid when the final score is equal or below the threshold (step 311). When the threshold is exemplary set to 20, the main domains "telekom.com" and "t-mobile.com" are considered as valid because their final scores are above 20, whereas the main domains "handelsblatt.com" and "indiatimes.com" are considered as invalid because the final scores are below 20. Preferably the entries of the blacklist of the additional filter step 304a are generated automatically on basis of the identification or validation of the main domains by the computer system 1, wherein in particular main domains that were considered invalid a certain number of times are added to the blacklist.

The computer system 1 is configured to perform the steps described above. The computer system is preferably one physical and/or logical server (cloud service) that is configured to perform the above-described steps. In particular the computer system comprises several physical and/or logical server (cloud service), preferably deployed as computer cluster with several nodes. The computer system 1 comprises preferably means that are configured to perform the above-mentioned steps automatically. In particular the means, preferably communication means, of the computer system 1 are configured to access the at least one first data source 3a, 3b and the at least one second data source 3A, 3C, 3D, 3E by using or sending an input or a query to the at least one first data source 3a, 3b and the at least one second data source 3A, 3C, 3D, 3E. The means of the computer system are in particular configured to search or scan the at least one first data source 3a, 3b to obtain the URLs or domains for the generation of the search list and wherein the means are configured to search and scan the at least one second data source 3A, 3C, 3D, 3E to obtain the number of appearances of the validation keyword within the at least one second data source 3A, 3C, 3D, 3E.

### References

- 1: computer system
- 2: first data base
- 3: data source
- 3a, 3b: first data source
- 3A: second data source, domain data base
- 3C: second data source, certificate information
- 3D: second data source, content of a website
- 3E: second data source, content of an imprint
- 4: third data base
- 5: fourth data base
- 6: fifth data base
- 53: machine learning unit

- 100: initial step
- 200: target name searching step
- 300: main domain query step
- 400: subdomain enumeration step
- 500: domain validation step
- 600: domain name searching step
- 700: IP address searching step
- 800: netblock searching step

- 301: target name
- 302: enrichment step
- 303: searching step
- 304: extraction step
- 304a: filter step
- 305: counting step
- 306: keyword generation step
- 307: scoring step
- 307a: scoring step using domain data base 3A
- 307b: scoring step using domain name
- 307c: scoring step using certificate information 3C
- 307d: scoring step using content of a website 3D
- 307e: scoring step using content of an imprint 3E
- 308: calculation step
- 309: validation step
- 310: valid main domain
- 311: invalid main domain

## Claims

1. Method for automatic and dynamic determination of main domains belonging to an entity, comprising the following steps performed by a computer system (1):
- a searching step (303), wherein a search list is generated by using a target name as input to a at least one first data source (3a, 3b), in particular a merge and acquisition data base or a web search engine;
- an extraction step (304), wherein a list of main domains, in particular second-level domains, is extracted from the search list;
- a counting step (305), wherein a first score is determined for each main domain of the list of main domains by counting the number of the appearances within the list of main domains;
- a keyword generation step (306), wherein at least one validation keyword is generated on basis of the target name;
- a scoring step (307), wherein at least one second score is determined for each main domain of the list of main domains by multiplying the number of appearances of the at least one validation keyword within a at least one second data source (3A, 3C, 3D, 3E) with a validation keyword factor assigned to the validation keyword;
- a calculation step (308), wherein a final score is determined for each main domain as sum of the first score and the at least one second score; and
- a validation step (309), in which the validity of each main domain is determined on basis of a comparison of the final score of each main domain with a threshold, wherein the main domain is considered as valid if the final score is above the threshold (step 310), and wherein the main domain is considered as invalid if the final score in equal or below the threshold (311), wherein a valid main domain is a main domain that is identified as belonging to the organization or entity, whereas an invalid main domain is a main domain that is identified as not belonging to the organization or entity.

2. Method for automatic and dynamic determination of main domains according to claim 1, wherein the method comprises an enrichment step (302), wherein enriched target names are generated by appending identification words to the target name, and wherein the enriched target names are used as input to at least one first data source (3a, 3b) within the searching step (303).

3. Method for automatic and dynamic determination of main domains according to claim 2, wherein the searching step (303) comprises the usage of the target name and/or the enriched target name as input for more than one first data source (3a, 3b), wherein a list of uniform resource locators (URLs) or a list of domains is generated for each fist data source (3a, 3b), and wherein the search list is generated by aggregation of the lists of uniform resource locators (URLs) or the lists of domains of the first data sources (3a, 3b).

4. Method for automatic and dynamic determination of main domains according to one of the previous claims, wherein the extraction step (304) contains an additional filter step (304a), in which main domains that are comprised in a blacklist are filtered out of the list of main domains.

5. Method for automatic and dynamic determination of main domains according to one of the previous claims,
- wherein the validation keywords are generated by removing stop words, company forms and/or words having less than three characters from the target name; and/or
- wherein the validation keywords are generated by a combination of the target name with at least one organization names using in particular delimiters; and
- wherein a validation keyword factor is assigned for each validation keyword, whereas in particular a higher validation keyword factor is assigned for validation keywords that are a combination of the target name with at least one organization name than for validation keywords that are only based on the target name.

6. Method for automatic and dynamic determination of main domains according to one of the previous claims, wherein the at least one second data source is a domain data base (3A) which contains information about domains and IP addresses, in particular an IP-Whois data base, wherein a database entry for the main domain or a corresponding IP address is scanned for the number of appearances of the validation keywords, in particular the data base entry that contains the organization name to which the domain is assigned (step 307a).

7. Method for automatic and dynamic determination of main domains according to one of the previous claims, wherein the at least one second data source is a certificate information (3C) of the main domain, in particular the HTTPS certificate of the website that corresponds to the main domain, in particular wherein the certified information that comprises the organization name assigned to the domain is scanned for the number of appearances of the validation keywords (step 307c).

8. Method for automatic and dynamic determination of main domains according to one of the previous claims, wherein the at least one second data source is the domain name (step 307b).

9. Method for automatic and dynamic determination of main domains according to one of the previous claims, wherein the at least one second data source is the content of the website (3D) that corresponds to the main domain, in particular the HTTP content or HTTPS content, wherein the source code of the website is scanned for the number of appearances of the validation keywords (step 307d).

10. Method for automatic and dynamic determination of main domains according to claim 9, wherein the at least one second data source is the content of the imprint (3E) of the website that corresponds to the main domain, wherein the source code of the imprint is scanned for the number of appearances of the validation keywords, in particular an imprint information that comprises the organization name (step 307e).

11. Method for automatic and dynamic determination of main domains according to one of the previous claims, wherein more than one second scores are determined for each main domain and the second scores are added to the first score,
- wherein more than one validation keywords are generated and the respective second score is determined for each validation keyword; and/or
- wherein more than one second data sources (3A, 3C, 3D, 3E) are scanned for the number of validation keyword appearances and the second score is determined for each second data source (3A, 3C, 3D, 3E).

12. Method for automatic and dynamic determination of main domains according to the previous claims, wherein the at least one second score is weighted differently depending on the second data source (3A, 3C, 3D, 3E), in particular wherein the at least one second score of the certificate information (3C) and/or the at least one second score of the imprint (3E) is weighted higher than the at least one scores of the other second data sources (3A, 3D).

13. Computer system (1) for automatic and dynamic determination of main domains belonging to an entity, configured to perform the steps of claim 1 to 12.

14. Computer program product for automatic and dynamic determination of main domains belonging to an entity which, when executed by a computer system (1), causes the computer system (1) to perform the steps of claim 1 to 12.

## Patentansprüche

1. Verfahren zur automatischen und dynamischen Bestimmung von Hauptdomänen, die zu einer Entität gehören, umfassend die folgenden Schritte, durchgeführt durch ein Computersystem (1):
- einen Suchschritt (303), bei dem unter Verwendung eines Zielnamens als Eingabe an mindestens eine erste Datenquelle (3a, 3b), insbesondere eine Verschmelzungs- und Übernahmedatenbank oder eine Web-Suchmaschine, eine Suchliste generiert wird;
- einen Extraktionsschritt (304), bei welchem eine Liste von Hauptdomänen, insbesondere Second-Level-Domänen, aus der Suchliste extrahiert wird;
- einen Zählschritt (305), bei welchem für jede Hauptdomäne aus der Liste von Hauptdomänen durch Zählen der Anzahl von Vorkommen innerhalb der Liste von Hauptdomänen eine erste Wertungszahl bestimmt wird;
- einen Schlüsselwort-Generierungsschritt (306), bei welchem auf der Basis des Zielnamens mindestens ein Validationsschlüsselwort generiert wird;
- einen Wertungsschritt (307), bei welchem für jede Hauptdomäne aus der Liste von Hauptdomänen durch Multiplizieren der Anzahl von Vorkommen des mindestens einen Validationsschlüsselworts innerhalb mindestens einer zweiten Datenquelle (3A, 3C, 3D, 3E) mit einem dem Validationsschlüsselwort zugewiesenen Validationsschlüsselwortfaktor eine zweite Wertungszahl bestimmt wird;
- einen Berechnungsschritt (308), bei welchem für jede Hauptdomäne eine finale Wertungszahl als Summe der ersten Wertungszahl und der mindestens einen zweiten Wertungszahl bestimmt wird; und
- einen Validierungsschritt (309), bei welchem die Gültigkeit jeder Hauptdomäne auf Basis eines Vergleichs der finalen Wertungszahl der jeweiligen Hauptdomäne mit einem Schwellwert bestimmt wird, wobei die Hauptdomäne als gültig betrachtet wird, wenn die finale Wertungszahl über dem Schwellwert ist (Schritt 310), und wobei die Hauptdomäne als ungültig betrachtet wird, wenn die finale Wertungszahl gleich dem oder kleiner als der Schwellwert ist (311), wobei eine gültige Hauptdomäne eine Hauptdomäne ist, die als zu der Organisation oder Entität gehörig identifiziert wird, wobei eine ungültige Hauptdomäne eine Hauptdomäne ist, die als nicht zu der Organisation oder Entität gehörig identifiziert wird.

2. Verfahren zur automatischen und dynamischen Bestimmung von Hauptdomänen nach Anspruch 1, wobei das Verfahren einen Anreicherungsschritt (302) umfasst, bei welchem angereicherte Zielnamen generiert werden, indem an den Zielnamen Identifikationswörter angehängt werden, und wobei die angereicherten Zielnamen als Eingabe an mindestens eine erste Datenquelle (3a, 3b) innerhalb des Suchschritts (303) benutzt werden.

3. Verfahren zum automatischen und dynamischen Bestimmen von Hauptdomänen nach Anspruch 2, wobei der Suchschritt (303) die Verwendung des Zielnamens und/oder des angereicherten Zielnamens als Eingabe an mehr als eine erste Datenquelle (3a, 3b) umfasst, wobei für jede erste Datenquelle (3a, 3b) eine Liste von Uniform-Resource-Locators (URLs) oder eine Liste von Domänen generiert wird, und wobei die Suchliste durch Aggregation der Listen von Uniform-Resource-Locators (URLs) oder der Listen von Domänen der ersten Datenquellen (3a, 3b) generiert wird.

4. Verfahren zum automatischen und dynamischen Bestimmen von Hauptdomänen nach einem der vorhergehenden Ansprüche, wobei der Extraktionsschritt (304) einen zusätzlichen Filterschritt (304a) umfasst, bei welchem Hauptdomänen, die in einer Schwarzen Liste enthalten sind, aus der Liste von Hauptdomänen herausgefiltert werden.

5. Verfahren zum automatischen und dynamischen Bestimmen von Hauptdomänen nach einem der vorhergehenden Ansprüche,
- wobei die Validationsschlüsselwörter durch Entfernen von Stoppwörtern, Unternehmensformen und/oder Wörtern mit geringer Größe aus dem Zielnamen generiert werden; und/oder
- wobei die Validationsschlüsselwörter durch eine Kombination aus dem Zielnamen mit mindestens einem Organisationsnamen unter Verwendung insbesondere von Trennzeichen generiert werden; und
- wobei jedem Validationsschlüsselwort ein Validationsschlüsselwortfaktor zugewiesen wird, wobei insbesondere für Validationsschlüsselwörter, die eine Kombination des Zielnamens mit mindestens einem Organisationsnamen sind, ein höherer Validationsschlüsselwortfaktor zugewiesen wird als für Validationsschlüsselwörter, die lediglich auf dem Zielnamen basieren.

6. Verfahren zum automatischen und dynamischen Bestimmen von Hauptdomänen nach einem der vorhergehenden Ansprüche, wobei die mindestens eine zweite Datenquelle eine Domänendatenbank (3A) ist, die Informationen über Domänen und IP-Adressen enthält, insbesondere eine IP-Whois-Datenbank, wobei ein Datenbankeintrag für die Hauptdomäne oder eine entsprechende IP-Adresse nach der Anzahl von Vorkommen der Validationsschlüsselwörter gescannt wird, insbesondere der Datenbankeintrag, der den Organisationsnamen enthält, dem die Domäne zugewiesen ist (Schritt 307a).

7. Verfahren zum automatischen und dynamischen Bestimmen von Hauptdomänen nach einem der vorherigen Ansprüche, wobei die mindestens eine zweite Datenquelle eine Zertifikatinformation (3C) der Hauptdomäne ist, insbesondere das HTTPS-Zertifikat der Website, die zu der Hauptdomäne gehört, insbesondere wobei die zertifizierten Informationen, die den Organisationsnamen umfassen, welcher der Domäne zugewiesen ist, nach der Anzahl von Vorkommen der Validationsschlüsselwörter gescannt werden (Schritt 307c).

8. Verfahren zum automatischen und dynamischen Bestimmen von Hauptdomänen nach einem der vorherigen Ansprüche, wobei die mindestens eine zweite Datenquelle der Domänenname ist (Schritt 307b).

9. Verfahren zum automatischen und dynamischen Bestimmen von Hauptdomänen nach einem der vorherigen Ansprüche, wobei die mindestens eine zweite Datenquelle der Inhalt der Website (3D) ist, die zu der Hauptdomäne gehört, insbesondere der HTTP-Inhalt oder der HTTPS-Inhalt, wobei der Quellcode der Website nach der Anzahl von Vorkommen der Validationsschlüsselwörter gescannt wird (Schritt 307d).

10. Verfahren zum automatischen und dynamischen Bestimmen von Hauptdomänen nach Anspruch 9, wobei die mindestens eine zweite Datenquelle der Inhalt des Impressums (3E) der Website ist, die zu der Hauptdomäne gehört, wobei der Quellcode des Impressums nach der Anzahl von Auftreten der Validationsschlüsselwörter gescannt wird, insbesondere einer Impressumsinformation, die den Organisationsnamen umfasst (Schritt 307e).

11. Verfahren zum automatischen und dynamischen Bestimmen von Hauptdomänen nach einem der vorherigen Ansprüche, wobei mehr als eine zweite Wertungszahl bestimmt wird, eine für jede Hauptdomäne, und die zweiten Wertungszahlen zu der ersten Wertungszahl addiert werden,
- wobei mehr als ein Validierungsschlüsselwort erzeugt wird und die jeweilige zweite Wertungszahl für jedes Validierungsschlüsselwort bestimmt wird; und/oder
- wobei mehr als eine zweite Datenquelle (3A, 3C, 3D, 3E) nach der Anzahl von Vorkommen der Validationsschlüsselwörter gescannt wird und die zweite Wertungszahl für jede zweite Datenquelle (3A, 3C, 3D, 3E) bestimmt wird.

12. Verfahren zum automatischen und dynamischen Bestimmen von Hauptdomänen nach den vorherigen Ansprüchen, wobei die mindestens eine zweite Wertungszahl abhängig von der zweiten Datenquelle (3A, 3C, 3D, 3E) unterschiedlich gewichtet wird, insbesondere wobei die mindestens eine zweite Wertungszahl der Zertifikatinformationen (3C) und/oder die mindestens eine zweite Wertungszahl des Impressums (3E) höher als die mindestens eine Wertungszahl der anderen zweiten Datenquellen (3A, 3D) gewichtet wird.

13. Computersystem (1) zur automatischen und dynamischen Bestimmung von Hauptdomänen, die zu einer Entität gehören, das dazu eingerichtet ist, die Schritte nach Anspruch 1 bis 12 durchzuführen.

14. Computerprogrammprodukt zur automatischen und dynamischen Bestimmung von Hauptdomänen, die zu einer Entität gehören, welches, wenn es durch ein Computersystem (1) ausgeführt wird, das Computersystem (1) dazu veranlasst, die Schritte nach Anspruch 1 bis 12 durchzuführen.

## Revendications

1. Procédé de détermination automatique et dynamique de domaines principaux appartenant à une entité comprenant les étapes suivantes exécutées par un système informatique (1) :
- une étape de recherche (303), dans laquelle une liste de recherche est générée en utilisant un nom cible comme entrée d'au moins une première source de données (3a, 3b), en particulier une base de données de fusion et d'acquisition ou un moteur de recherche web ;
- une étape d'extraction (304), dans laquelle une liste de domaines principaux, en particulier des domaines de deuxième niveau, est extraite de la liste de recherche ;
- une étape de comptage (305), dans laquelle un premier score est déterminé pour chaque domaine principal de la liste des domaines principaux en comptant le nombre d'apparitions dans la liste des domaines principaux ;
- une étape de génération de mot-clé (306), dans laquelle au moins un mot-clé de validation est généré sur la base du nom cible ;
- une étape de notation (307), dans laquelle au moins un deuxième score est déterminé pour chaque domaine principal de la liste de domaines principaux en multipliant le nombre d'apparitions dudit au moins un mot-clé de validation avec au moins une deuxième source de données (3A, 3C, 3D, 3E) avec un facteur de mot-clé de validation attribué au mot-clé de validation ; et
- une étape de calcul (308), dans laquelle un score final est déterminé pour chaque domaine principal comme la somme du premier score et d'au moins le deuxième score ; et
- une étape de validation (309), dans laquelle la validité de chaque domaine principal est déterminée sur la base d'une comparaison du score final de chaque domaine principal avec un seuil, dans lequel le domaine principal est considéré comme valide si le score final est supérieur au seuil (étape 310) et dans lequel le domaine principal est considéré comme invalide si le score final est égal ou inférieur au seuil (étape 311), dans lequel un domaine principal valide est un domaine principal qui est identifié comme appartenant à l'organisation ou l'entité, alors qu'un domaine principal invalide est un domaine principal qui est identifié comme n'appartenant pas à l'organisation ou l'entité.

2. Procédé de détermination automatique et dynamique de domaines principaux selon la revendication 1, dans lequel le procédé comprend une étape d'enrichissement (302), dans laquelle des noms cibles enrichis sont générés en ajoutant des mots d'identification au nom cible et dans lequel les noms cibles enrichis sont utilisés comme entrée à au moins une première source de données (3a, 3b) dans l'étape de recherche (303).

3. Procédé de détermination automatique et dynamique de domaines principaux selon la revendication 2, dans lequel l'étape de recherche (303) comprend l'utilisation du nom cible et/ou du nom cible enrichi comme entrée pour plus d'une première source de données (3a, 3b), dans lequel une liste de localisateurs de ressources uniformes (URLs) ou une liste de domaines est générée pour chaque première source de données (3a, 3b), et dans lequel la liste de recherche est générée par agrégation des listes de localisateurs de ressources uniformes (URLs) ou des listes de domaines des premières sources de données (3a, 3b) .

4. Procédé de détermination automatique et dynamique de domaines principaux selon une des revendications précédentes, dans lequel l'étape d'extraction (304) contient une étape de filtrage supplémentaire (304a), dans laquelle les domaines principaux qui sont compris dans une liste noire sont filtrés de la liste des domaines principaux.

5. Procédé de détermination automatique et dynamique de domaines principaux selon une des revendications précédentes,
- dans lequel les mots-clés de validation sont générés en supprimant des mots vides, des formulaires d'entreprise et/ou des mots ayant une petite taille du nom cible et/ou
- dans lequel les mots-clés de validation sont généré par une combinaison du nom cible avec au moins un nom d'organisation utilisant notamment des délimiteurs, et
- dans lequel un facteur de mot-clé de validation est attribué pour chaque mot-clé de validation tandis qu'en particulier un facteur de mot-clé de validation supérieur est attribué pour les mots-clés de validation qui sont une combinaison du nom de la cible avec au moins un nom d'organisation que pour les mots-clés de validation uniquement basés sur le nom de la cible.

6. Procédé de détermination automatique et dynamique de domaines principaux selon une des revendications précédentes, dans lequel la au moins une deuxième source de données est une base de données de domaines (3A) qui contient des informations sur les domaines et les adresses IP, en particulier une base de données IP-Whois, dans laquelle une entrée de base de données pour le domaine principal ou une adresse IP correspondante est analysée pour le nombre d'apparitions des mots-clés de validation, en particulier l'entrée de base de données qui contient le nom de l'organisation à laquelle le domaine est attribué (étape 307a).

7. Procédé de détermination automatique et dynamique de domaines principaux selon une des revendications précédentes, dans lequel la au moins une deuxième source de données est une information de certificat (3C) du domaine principal, notamment le certificat HTTPS du site web qui correspond au domaine principal, en particulier dans lequel les informations certifiées qui comprennent le nom de l'organisation attribuée au domaine sont analysées pour le nombre d'apparitions des mots-clés de validation (étape 307c).

8. Procédé de détermination automatique et dynamique de domaines principaux selon une des revendications précédentes, dans lequel la au moins une deuxième source de données est le nom de domaine (étape 307b).

9. Procédé de détermination automatique et dynamique de domaines principaux selon une des revendications précédentes, dans lequel la au moins une deuxième source de données est le contenu du site web (3D) correspondant au domaine principal, notamment le contenu HTTP ou le contenu HTTPS dans lequel le code source du site Web est analysé pour le nombre d'apparitions des mots-clés de validation (étape 307d).

10. Procédé de détermination automatique et dynamique de domaines principaux selon la revendication 9, dans lequel la au moins une deuxième source de données est le contenu de l'empreinte (3E) du site web qui correspond au domaine principal, dans lequel le code source de l'empreinte est analysé pour le nombre d'apparitions des mots clés de validation notamment une information d'empreinte qui comprend le nom de l'organisation (étape 307e).

11. Procédé de détermination automatique et dynamique de domaines principaux selon une des revendications précédentes, dans lequel plus d'un deuxièmes scores sont déterminés pour chaque domaine principal et les deuxièmes scores sont ajoutés au premier score,
- dans lequel plus d'un mots-clés de validation sont générés et le deuxième score respectif est déterminé pour chaque mot-clé de validation ; et/ou
- dans lequel plus d'une deuxième source de données (3A, 3C, 3D, 3E) sont balayées pour le nombre d'apparitions de mot-clé de validation et le deuxième score est déterminé pour chaque deuxième source de données (3A, 3C, 3D, 3E).

12. Procédé de détermination automatique et dynamique de domaines principaux selon les revendications précédentes, dans lequel le au moins un deuxième score est pondéré différemment selon la deuxième source de données (3A, 3C, 3D, 3E), notamment dans lequel le au moins un deuxième score des informations de certificat (3C) et/ou au moins un deuxième score de l'empreinte (3E) est pondéré plus haut que le au moins un score des autres deuxièmes sources de données (3A, 3D).

13. Système informatique (1) de détermination automatique et dynamique de domaines principaux appartenant à une entité, configuré pour exécuter les étapes des revendications 1 à 12.

14. Produit de programme informatique de détermination automatique et dynamique de domaines principaux appartenant à une entité qui, lorsqu'il est exécuté par un système informatique (1), amène le système informatique (1) à exécuter les étapes des revendications 1 à 12.
